Europäisches Patentamt

European Patent Office

Office européen des brevets

(19)

(11) Veröffentlichungsnummer : **0 110 095**
**B1**

(12) # EUROPÄISCHE PATENTSCHRIFT

(45) Veröffentlichungstag der Patentschrift :
30.07.86

(21) Anmeldenummer : **83110412.0**

(22) Anmeldetag : **19.10.83**

(51) Int. Cl.⁴ : **B 66 B  1/16**, G 05 B 19/23,
**H 02 P  5/40**

(54) Sollwertgeber für eine Antriebsregelungseinrichtung.

(30) Priorität : **19.11.82 CH 6740/82**

(43) Veröffentlichungstag der Anmeldung :
**13.06.84 Patentblatt 84/24**

(45) Bekanntmachung des Hinweises auf die Patenterteilung : **30.07.86 Patentblatt 86/31**

(84) Benannte Vertragsstaaten :
**AT DE FR GB IT NL**

(56) Entgegenhaltungen :
**EP-A- 0 026 406**
**CH-A-  424 935**
**DE-B- 1 186 184**
**US-A- 3 428 792**
**US-A- 3 911 347**
**US-A- 3 941 987**

(73) Patentinhaber : **INVENTIO AG**
**Seestrasse 55**
**CH-6052 Hergiswil NW (CH)**

(72) Erfinder : **Friedli, Paul, Dr.**
**Bucheggstrasse 172**
**CH-8057 Zürich (CH)**
Erfinder : **Hinderling, Thomas, Dr.**
**Rütimattstrasse 32**
**CH-6030 Ebikon (CH)**
Erfinder : **Begle, Guntram**
**Baldismoosstrasse 44**
**CH-6043 Adligenswil (CH)**

Jouve, 18, rue St-Denis, 75001 Paris, France

## Beschreibung

Die Erfindung betrifft einen Sollwertgeber für die Regelung des Hochlaufes eines Antriebsmotors, wobei der Sollwertgeber einen Steuerspeicher aufweist, in welchem mindestens zulässige Ruckwerte und Grenzwerte der Beschleunigung gespeichert sind und welcher mit einem Sollwerttaktgeber und drei Integratoren für die Bildung der Beschleunigung, der Geschwindigkeit und des Weges verbunden ist, und wobei beim Auftreten der vom Sollwerttaktgeber erzeugten Taktsignale die Ausgangsgrösse des dritten Integrators einem Wegregelkreis einer Antriebsregelungseinrichtung als Wegsollwert zugeführt wird, und eine sich während des Hochlaufes fortlaufend vergrössernde Wegregelabweichung gebildet wird, Mit der europäischen Patentanmeldung Nr. 0 026 406 ist eine Antriebssteuerung bekannt geworden, die einen Sollwertgeber gemäss Oberbegriff aufweist. Bei diesem in Digitaltechnik ausgeführten Sollwertgeber, besteht der Steuerspeicher aus einem programmierbaren Festwertspeicher, dem vom Taktgenerator eines Digitalrechners über einen Frequenzteiler Sollwerttaktsignale zugeführt werden. Beim Auftreten der Sollwerttaktsignale werden die zugeordneten Ruckwerte abgerufen und unter Berücksichtigung der Beschleunigungsgrenzwerte durch numerische Integration Wegsollwerte erzeugt. Mit derart gebildeten, lediglich von zulässigen Ruck- und Beschleunigungswerten abhängigen Wegsollwerten, können beispielsweise bei Personenaufzügen Fahrkurven erzeugt werden, mittels welchen optimale Ergebnisse in bezug auf Fahrkomfort und die Zeitdauer einer Fahrt erzielbar sind.

Andererseits sind der Anwendung derartiger Sollwertgeber je nach Art der Antriebsmaschine gewisse Grenzen gesetzt. So ist beispielsweise der Hochlauf eines Asynchronmotores im unteren Drehzahlbereich bei grösseren zur Verfügung stehenden Drehmomenten gut regelbar. Im oberen Drehzahlbereich fällt das Drehmoment mit zunehmender Drehzahl stark ab, wobei der Motor wesentlich mehr Zeit benötigt eine vorgegebene Drehzahl zu erreichen. Er kann daher dem vorstehend beschriebenen, mit einer bestimmten, konstanten Taktfrequenz arbeitenden Sollwertgeber nicht mehr folgen, so dass die Regelabweichung immer grösser wird und die Regelung ausser Eingriff gerät.

Die der Erfindung zugrunde liegende Aufgabe besteht darin, zwecks Behebung vorstehend beschriebener Schwierigkeiten, den Sollwertgeber gemäss Oberbegriff im oberen Drehzahlbereich an die Hochlaufkennlinie des Motors anzupassen, so dass die Regelung über dem gesamten Drehzahlbereich gewährleistet ist.

Zur Lösung dieser Aufgabe wird bei der Erfindung, wie sie im unabhängigen Anspruch gekennzeichnet ist, die Regelabweichung derart überwacht, dass bei Ueberschreiten der grössten, der Vollaussteuerung der Stellglieder zugeordneten Regelabweichung die Taktfrequenz des Sollwertgebers proportional der Ueberschreitung verkleinert wird. Die Sollwerte werden dem Regelkreis solange in entsprechend grösseren Zeitabständen zugeführt, bis die grösste Regelabweichung unterschritten wird, worauf der Sollwertgeber mit der ursprünglichen Taktfrequenz weiter arbeitet.

Die mit der Erfindung erzielten Vorteile sind insbesondere darin zu sehen, dass mit dem vorgeschlagenen Sollwertgeber auch mit einfachen, preislich günstigen Motoren, beispielsweise bei Aufzugsantrieben, optimale Fahrkurven in bezug auf Fahrkomfort und minimaler Zeitdauer einer Fahrt erzielbar sind. Ein weiterer, mit der Anpassung des Sollwertverlaufes an die Hochlaufkennlinie erzielter Vorteil liegt darin, dass der Motor im oberen Drehzahlbereich nicht gezwungen wird dem Sollwertgeber zu folgen, so dass Motoren kleinerer Leistung verwendet werden können.

Im folgenden wird die Erfindung an Hand eines auf der Zeichnung dargestellten Ausführungsbeispieles näher erläutert. Es zeigen :

Figur 1 eine schematische Darstellung des erfindungsgemässen, an einer Antriebsregelungseinrichtung angeschlossenen Sollwertgebers,

Figur 2 ein Diagramm des zeitlichen Verlaufes der Wegsoll- und -istwerte $s_s$, $s_i$ sowie der korrigierten Wegsollwerte $s_s'$ während der Beschleunigung bis auf eine Höchstgeschwindigkeit, und

Figur 3 ein Diagramm des zeitlichen Verlaufes von Geschwindigkeitssoll- und -istwerten $v_s$, $v_i$ sowie der daraus resultierenden Wegregelabweichungen $\Delta S$ während der Beschleunigung bis auf eine Höchstgeschwindigkeit.

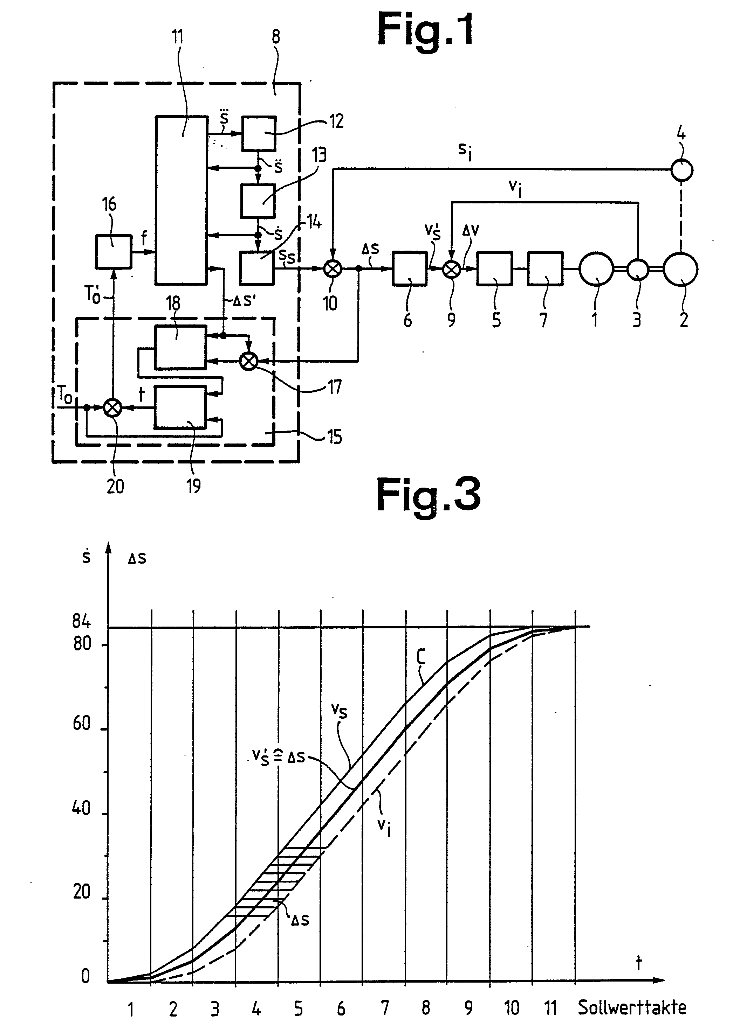

In der Fig. 1 bilden ein Elektromotor 1, eine von diesem anzutreibende Last 2, ein Geschwindigkeitsistwertgeber 3, ein Wegistwertgeber 4, ein Geschwindigkeitsregler 5, ein Wegregler 6, ein Stellglied 7 und ein Sollwertgeber 8 eine Antriebsregelungseinrichtung. Der Geschwindigkeitsistwertgeber 3 ist mit dem Elektromotor 1 gekuppelt und mit einem ersten Subtrahierer 9 für die Bildung der Geschwindigkeitsregelabweichung $\Delta v$ verbunden. Der Wegistwertgeber 4 ist an einem zweiten Subtrahierer 10 für die Bildung der Wegregelabweichung $\Delta s$ angeschlossen und mit der Last 2 derart verbunden, dass Lageveränderungen unmittelbar erfasst werden können. Der Elektromotor 1 kann beispielsweise ein Asynchronmotor sein, wobei das Stellglied 7 aus mittels Zündwinkelverstellung gesteuerten, im Statorkreis angeordneten Thyristoren besteht.

Der Sollwertgeber 8 besteht aus einem Steuerspeicher 11, drei die Beschleunigung $\ddot{s}$, die Geschwindigkeit $\dot{s}$ und den Weg $s_s$ erzeugende Integratoren 12, 13, 14, einem Korrekturglied 15 und einem Sollwerttaktgeber 16, beispielsweise in Form eines Funktionsgenerators mit steuerbarer Frequenz. Im Steuerspeicher 11 sind zulässige Ruckwerte und Grenzwerte der Beschleunigung und Geschwindigkeit gespeichert, wobei die Ruckwerte dem ersten Integrator 12 zugeführt werden und die erzeugten Beschleunigungs- und Geschwindigkeitswerte zum Steuerspeicher 11 zwecks Vergleiches mit den Grenzwerten rückgeführt werden. Der Ausgang des dritten Integrators 14 steht mit dem zweiten Subtrahierer 10 für die Bildung der Wegregelabweichung $\Delta s$ in Verbindung. Im Steuerspeicher 11 ist weiterhin ein Grenzwert $\Delta s'$ der Wegregelabweichung gespeichert, welcher der bei Vollaussteuerung der Thyristoren des Stellgliedes 7 vorhandenen grössten Wegregelabweichung entspricht, und welcher einem Eingang eines Substrahierers 17 und einem Eingang eines Dividierers 18 des Korrekturgliedes 15 zugeführt wird. Der andere Eingang des Dividierers 18 ist am Ausgang des Subtrahierers 17 angeschlossen, dessen zweiter Eingang mit dem Ausgang des Subtrahierers 10 für die Bildung der Wegregelabweichung $\Delta s$ in Verbindung steht. Das Korrekturglied 15 weist ferner einen Multiplizierer 19 und einen Addierer 20 auf, wobei der eine Eingang des Multiplizierers 19 mit dem Ausgang des Dividierers 18 und der andere Eingang mit einem Eingang des Addierers 20 verbunden ist und letzteren beiden Eingängen die Zeit $T_o$ einer Periode des Taktsignales, beispielsweise in Form einer konstanten Spannung zugeführt wird. Der Ausgang des Multiplizierers 19 ist mit dem anderen Eingang des Addierers 20 verbunden, wobei dessen Ausgang am Eingang des Sollwerttaktgebers 16 angeschlossen ist.

In einer bevorzugten Ausführungsform sind der Sollwertgeber 8 sowie die Regler 5, 6 und die Subtrahierer 9, 10 in ein Mikrocomputersystem integriert, wobei der Steuerspeicher 11 ein programmierbarer Festwertspeicher ist und die Funktionen der Integratoren 12, 13, 14, des Korrekturgliedes 15 und der Subtrahierer 9, 10 von der Recheneinheit eines Mikroprozessors ausgeführt werden.

Der vorstehend beschriebene Sollwertgeber arbeitet wie folgt :

Bei einem Startbefehl, beispielsweise für die Fahrt einer Aufzugskabine, werden vom Sollwerttaktgeber 16 Taktsignale erzeugt und dem Steuerspeicher 11 zugeführt. Während einer Periode des Taktsignales, im folgenden auch Sollwerttakt genannt, wird der zugeordnete Ruckwert $\dddot{s}$ aus dem Steuerspeicher 11 abgerufen und dem ersten Integrator 12 zugeführt. Durch fortgesetzte numerische Integration erfolgt in den Integratoren 12, 13, 14 die Ermittlung der Beschleunigung $\ddot{s}$ , der Geschwindigkeit $\dot{s}$ und des Weges $s_s$, wobei dei Erreichen der Beschleunigungs- oder Geschwindigkeitsgrenzwerte jeweils ein neuer Ruckwert $\dddot{s}$ abgerufen und dem ersten Integrator 12 zugeführt wird. Den Geschwindigkeitsgrenzwerten sind Zielwege zugeordnet, wobei, wie aus der eingangs erwähnten europäischen Patentanmeldung 0 026 406 bekannt, bei Uebereinstimmung mit einem möglichen Zielweg der Aufzugskabine und Vorliegen eines Haltebefehls, eine durch den jeweiligen Geschwindigkeitsgrenzwert bestimmte Sollwertreihe für die Verzögerungsphase erzeugt wird. So werden beispielsweise gemäss untenstehender Tabelle während der Sollwerttakte 1, 2 und 3 die Ruckwerte $\dddot{s} = +4$ und nach Erreichen des Beschleunigungsgrenzwertes $\ddot{s} = 12$ die Ruckwerte $\dddot{s} = 0$ abgerufen. Bei Auftreten der Kriterien für die Einleitung der Verzögerungsphase während des Sollwerttaktes 5 und Erreichen des Geschwindigkeitsgrenzwertes $\dot{s} = 42$ der Sollwertreihe A werden die Ruckwerte $\dddot{s} = -4$ abgerufen. Treten die Kriterien erst während des Sollwerttaktes 6 auf, so wird bei Erreichen des Geschwindigkeitsgrenzwertes $\dot{s} = 54$ der nachfolgenden Sollwertreihe B der neue Ruckwert $\dddot{s} = -4$ abgerufen.

| | Soll-wert-reihe | Sollwerttakte | | | | | | | | | |
|---|---|---|---|---|---|---|---|---|---|---|---|
| | | 1 | 2 | 3 | 4 | 5 | 6 | 7 | 8 | 9 | 10 |
| Ruck $\dddot{s}$ | A | +4 | +4 | +4 | 0 | 0 | -4 | -4 | -4 | -4 | -4 |
| | B | +4 | +4 | +4 | 0 | 0 | 0 | -4 | -4 | -4 | -4 |
| | C | +4 | +4 | +4 | 0 | 0 | 0 | 0 | -4 | -4 | -4 |
| Beschl. $\ddot{s}$ | A | 4 | 8 | 12 | 12 | 12 | 8 | 4 | 0 | -4 | -4 |
| | B | 4 | 8 | 12 | 12 | 12 | 12 | 8 | 4 | 0 | -4 |
| | C | 4 | 8 | 12 | 12 | 12 | 12 | 12 | 8 | 4 | 0 |
| Geschw. $\dot{s}$ | A | 2 | 8 | 18 | 30 | 42 | 52 | 58 | 60 | 58 | 52 |
| | B | 2 | 8 | 18 | 30 | 42 | 54 | 64 | 70 | 72 | 70 |
| | C | 2 | 8 | 18 | 30 | 42 | 54 | 66 | 76 | 82 | 84 |
| Weg $s$ | A | 1 | 6 | 19 | 43 | 79 | 126 | 181 | 240 | 299 | 354 |
| | B | 1 | 6 | 19 | 43 | 79 | 127 | 186 | 253 | 324 | 395 |
| | C | 1 | 6 | 19 | 43 | 79 | 127 | 187 | 258 | 337 | 420 |

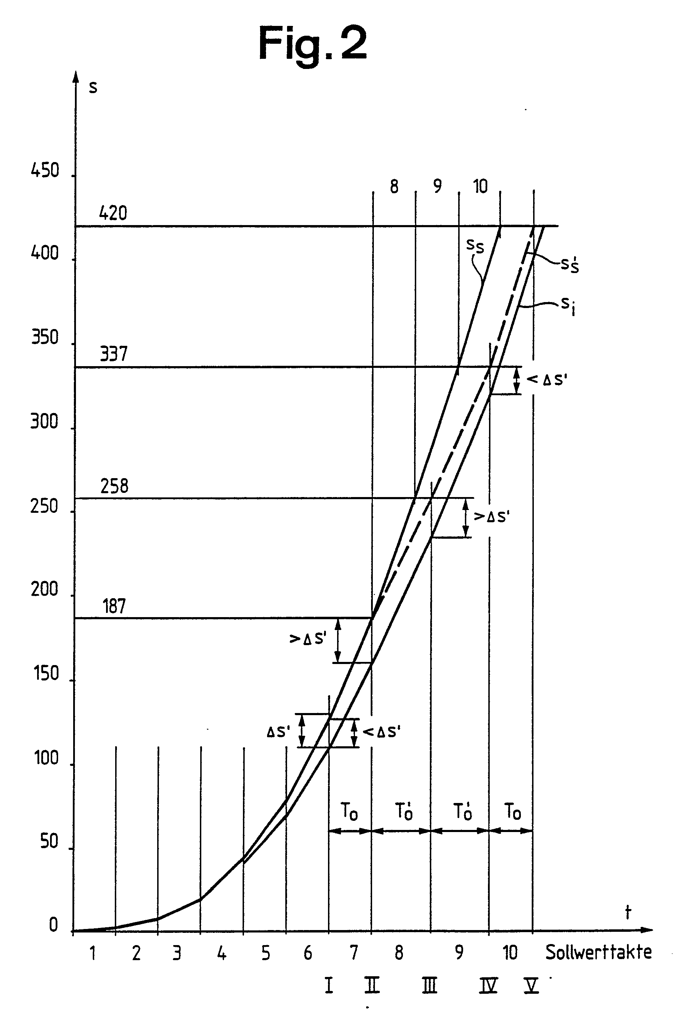

Es möge nun angenommen sein, dass vorerst kein Haltebefehl eintrifft und der Antrieb auf die der Nenngeschwindigkeit $v_{max}$ entsprechende Drehzahl beschleunigt wird, wobei die Nenngeschwindigkeit $v_{max}$ beispielsweise mit der durch den Geschwindigkeitsgrenzwert $\dot{s} = 66$ gekennzeichneten Sollwertreihe C bei $\dot{s} = 84$ erreicht wird (Tabelle und Fig. 3). Hierbei werden während der Sollwerttakte 8, 9 und 10 die Ruckwerte $\dddot{s} = -4$ abgerufen und die Wegsollwerte s = 258, 337 und 420 gebildet (Tabelle und Fig. 2). Wie eingangs erwähnt, kann jedoch der Elektromotor 1 im oberen Drehzahlbereich dem Sollwertgeber 8 nicht mehr folgen, wenn dieser ständig mit einer bestimmten, konstanten Taktfrequenz f arbeitet. Es sei nun angenommen, dass die Wegregelabweichung $\Delta s$ bei Sollwerttakt 6 noch kleiner als der Grenzwert $\Delta s'$ ist, so dass der Wegsollwert s = 187 für Sollwerttakt 7 während der der Taktfrequenz f entsprechenden Zeit $T_0$ eines Sollwerttaktes wirksam wird (Zeitpunkte I und II, Fig. 2). Es möge weiter angenommen sein, dass der Grenzwert $\Delta s'$ zum Zeitpunkt II überschritten wird. Hierbei wird im Subtrahierer 17 aus der Wegregelabweichung $\Delta s$ und dem Grenzwert $\Delta s'$ eine Differenz gebildet und im Dividierer 18 durch Division dieser Differenz mit dem Grenzwert $\Delta s'$ eine prozentuale Abweichung vom Grenzwert $\Delta s'$ ermittelt. Diese prozentuale Abweichung wird dem Multiplizierer 19 zugeführt, mittels welchem durch Multiplikation mit der Zeit $T_0$ eines Sollwerttaktes eine Zeitabweichung t gebildet wird. Im Addierer 20 wird aus dieser Zeitabweichung und der Zeit $T_0$ eine korrigierte Zeit $T_0'$ ermittelt, deren reziproker Wert dem Sollwerttaktgeber 16 als Eingangsspannung zugeführt wird, wobei die Taktfrequenz f proportional zu dieser Eingangsspannung verkleinert wird und der Wegsollwert s = 258 für Sollwerttakt 8 während der korrigierten Zeit $T_0'$ wirksam wird (Zeitpunkt II und III, Fig. 2). Ist im Zeitpunkt III die Regelabweichung immer noch grösser als der Grenzwert $\Delta s'$, so wird der Wegsollwert s = 337 für Sollwerttakt 9 ebenfalls einer korrigierten Zeit $T_0'$ zugeordnet (Zeitpunkt III und IV, Fig. 2). Sinkt die Regelabweichung im Zeitpunkt IV unter den Grenzwert $\Delta s'$, so arbeitet der Sollwerttaktgeber 16 wieder mit der ursprünglichen Taktfrequenz f, wobei der Wegsollwert s = 420 für Sollwerttakt 10 während der ursprünglichen Zeit $T_0$ wirksam wird (Zeitpunkt IV und V, Fig. 2). Auf diese Weise wird eine Wegsollwert-Kennlinie $s_s'$ erzeugt, welche der Wegistwert-Kennlinie $s_i$ derart angepasst ist, dass die Regelung über den gesamten Drehzahlbereich gewährleistet ist. Die aus den Wegsoll- und -istwerten gebildete Wegregelabweichungs-Kennlinie $\Delta s$ wird dem Antrieb als Fahrkurve $v_s'$ vorgegeben, wobei gemäss Fig. 3 die auch aus dem Integral der Differenz von Geschwindigkeitssoll- und -istwerten $v_s$, $v_i$ ableitbare Wegregelabweichungs-Kennlinie $\Delta s$ nahezu die gleiche Form wie die der Sollwertreihe C obiger Tabelle entsprechende Geschwindigkeits-sollwert-Kennlinie $v_s$ hat.

Die in obenstehender Tabelle aufgeführten Zahlen für Ruck, Beschleunigung, Geschwindigkeit und Weg sind in Form von Binärzahlen gespeicherte Verhältniszahlen ; sie entsprechen daher nicht den tatsächlichen Werten der betreffenden physikalischen Grösse.

## Patentansprüche

1. Sollwertgeber für die Regelung des Hochlaufes eines Antriebsmotors, wobei der Sollwertgeber einen Steuerspeicher (11) aufweist, in welchem mindestens zulässige Ruckwerte und Grenzwerte der Beschleunigung gespeichert sind und welcher mit einem Sollwerttaktgeber (16) und drei Integratoren (12, 13, 14) für die Bildung der Beschleunigung, der Geschwindigkeit und des Weges verbunden ist, und wobei beim Auftreten der vom Sollwerttaktgeber (16) erzeugten Taktsignale die Ausgangsgrösse des dritten Integrators (14) einem Wegregelkreis einer Antriebsregelungseinrichtung als Wegsollwert zugeführt wird, und eine sich während des Hochlaufes fortlaufend vergrössernde Wegregelabweichung ($\Delta s$) gebildet wird, dadurch gekennzeichnet,
— dass ein Korrekturglied (15) vorgesehen ist, das über einen ersten Eingang mit dem Steuerspeicher (11) und einen zweiten Eingang mit dem Wegregelkreis verbunden ist, und dass ein Ausgang des Korrekturgliedes (15) an einem Eingang des Sollwerttaktgebers (16) angeschlossen ist,
— wobei den Eingängen des Korrekturgliedes (15) die Wegregelabweichung ($\Delta s$) und ein im Steuerspeicher (11) gespeicherter Grenzwert ($\Delta s'$) der Wegregelabweichung ($\Delta s$) zuführbar sind und bei Überschreiten des Grenzwertes ($\Delta s'$) wie an sich bekannt die Taktfrequenz (f) des Sollwerttaktgebers (16) veränderbar ist, und
— wobei der Grenzwert (s') der grössten, der Vollaussteuerung des Stellgliedes (7) der Antriebsregelungseinrichtung zugeordneten Wegregelabweichung (s) entspricht und die Taktfrequenz (f) proportional zur Überschreitung des Grenzwertes (s') veränderbar ist.
2. Sollwertgeber nach Patentanspruch 1, dadurch gekennzeichnet, dass das Korrekturglied (15) aus einem Subtrahierer (17), einem Dividierer (18), einem Multiplizierer (19) und einem Addierer (20) besteht, wobei der eine Eingang des Subtrahierers (17) mit einem Eingang des Dividierers (18) und dem Steuerspeicher (11) und der andere Eingang des Subtrahierers (17) mit dem Ausgang eines Subtrahierers (10) für die Bildung der Wegregelabweichung ($\Delta s$) verbunden ist, und wobei der Ausgang des Subtrahierers (17) des Korrekturgliedes (15) am anderen Eingang des Dividierers (18) angeschlossen ist, dessen Ausgang mit einem Eingang des Multiplizierers (19) in Verbindung steht, und dass der Addierer (20) über je einen Eingang mit dem Ausgang und dem anderen Eingang des Multiplizierers (19) und über seinen Ausgang mit dem Eingang des Sollwerttaktgebers (16) verbunden ist, wobei dem mit dem anderen Eingang des Multiplizierers (19) verbundenen Eingang des Addierers (20) ein konstanter, der Zeit ($T_0$) eines Sollwerttaktes proportionaler Betrag zuführbar ist.

**Claims**

1. Target value generator for the regulation of the starting of a drive motor, wherein the target value generator displays a control store (11), in which at least permissible jolt values and limit values of the acceleration are stored and which is connected with a target value pulse generator (16) and three integrators (12, 13, 14) for the formation of the acceleration, the speed and the travel, and wherein the output magnitude of the third integrator (14) is conducted as travel target value to a travel-regulating circuit of a drive regulation equipment on the occurrence of the pulse signals generated by the target value pulse generator (16) and a travel deviation ($\Delta s$) is formed, which increases continuously during the starting, characterised thereby,

— that a correction member (15) is provided, which is connected through a first input with the control store (11) and through a second input with the travel-regulating circuit and that an output of the correction member (15) is connected to an input of the target value pulse generator (16),

— wherein the travel deviation ($\Delta s$) and a limit value ($\Delta s'$), stored in the control store (11), of the travel deviation ($\Delta s$) are conductible to the inputs of the correction member (15) and the pulse frequency (f) of the target value pulse generator (16) is variable as is in itself known on the limit value ($\Delta s'$) being exceeded, and

— wherein the limit value ($\Delta s'$) corresponds to the greatest travel deviation ($\Delta s$) associated with the full deflection of the setting member (7) of the drive regulation equipment and the pulse frequency (f) is variable proportionally to the excess over the limit value ($\Delta s'$).

2. Target value generator according to patent claim 1, characterised thereby, that the correction member (15) consists of a subtracter (17), a divider (18), a multiplier (19) and an adder (20), wherein the one input of the subtracter (17) is connected with one input of the divider (18) and the other input of the subtracter (17) is connected with the outpout of a subtracter (10) for the formation of the travel deviation ($\Delta s$) and wherein the outpout of the subtracter (17) of the correction member (15) is connected to the other input of the divider (18), the output of which stands in connection with one input of the multiplier (19), and that the adder (20) is connected through a respective input with the output and with the other input of the multiplier (19) and through its outpout with the input of the target value pulse generator (16), wherein a constant amount, proportional to the time ($T_0$) of a target value pulse, is conductible to that input of the adder (20), which is connected with the other input of the multiplier (19).

**Revendications**

1. Générateur de valeurs de consigne pour la régulation de la marche à haut régime d'un moteur d'entraînement, ce générateur de valeurs de consigne comportant une mémoire de commande (11), dans laquelle au moins des dérivées troisièmes et des valeurs limites admissibles de l'accélération sont mémorisées et qui est reliée à un générateur (16) d'impulsions de cadence de valeurs de consigne et à trois intégrateurs (12, 13, 14) pour l'établissement de l'accélération, de la vitesse et de la course de déplacement, et dans lequel, lors de l'apparition des signaux de cadence produits par le générateur (16) d'impulsions de cadence de valeurs de consigne, la grandeur de sortie du troisième intégrateur (14) est envoyée, en tant que valeur de consigne de la course de déplacement, à un circuit de réglage de la course de déplacement d'un dispositif régulateur d'entraînement, et un écart ($\Delta s$) de réglage de la course de déplacement, qui augmente de façon continue pendant la marche à haut régime, est formé, caractérisé en ce

— qu'il est prévu un circuit de correction (15) qui est relié, par l'intermédiaire d'une première entrée, à la mémoire de commande (11) et, par l'intermédiaire d'une seconde entrée, au circuit de réglage de la course de déplacement, et qu'une sortie du circuit de correction (15) est raccordée à une entrée du générateur (16) d'impulsions de cadence de valeurs de consigne,

— l'écart ($\Delta s$) de réglage de la course de déplacement et une valeur limite ($\Delta s'$), mémorisée dans la mémoire de commande (11), de l'écart ($\Delta s$) de réglage de la course de déplacement pouvant être transmis aux entrées du circuit de correction (15), et la fréquence d'horloge (f) du générateur (16) d'impulsions de cadence de valeurs de consigne pouvant être modifiée, comme cela est connu en soi, lors du dépassement de la valeur limite ($\Delta s'$), tandis que

— la valeur limite (s') correspond à l'écart maximum (s) de réglage de la course de déplacement, associé à la commande totale de l'organe de réglage (7) du dispositif régulateur d'entraînement, et que la fréquence d'horloge (f) est modifiable proportionnellement au dépassement de la valeur limite (s').

2. Générateur de valeurs de consigne selon la revendication 1, caractérisé en ce que le circuit de correction (15) est constitué par un soustracteur (17), un diviseur (18), un multiplicateur (19) et un additionneur (20), une entrée du soustracteur (17) étant reliée à une entrée du diviseur (18) et à la mémoire de commande (11), et l'autre entrée du soustracteur (17) étant reliée à la sortie d'un soustracteur (10) pour la formation de l'écart ($\Delta$s) de réglage de la course de déplacement, et la sortie du soustracteur (17) du circuit de correction (15) étant raccordée à la seconde entrée du diviseur (18), dont la sortie est reliée à une entrée du multiplicateur (19), et en ce que l'additionneur (20) est relié, par ses entrées, respectivement à la sortie et à la seconde entrée du multiplicateur (19) et, par l'intermédiaire de sa sortie, à l'entrée du générateur (16) d'impulsions de cadence des valeurs de consigne, une valeur constante proportionnelle à la durée ($T_o$) d'une impulsion de cadence de la valeur de consigne pouvant être envoyée à l'entrée de l'additionneur (20), qui est reliée à la seconde entrée du multiplicateur (19).

# Fig.1

# Fig.3

Fig. 2